# FASCICULE DE BREVET EUROPEEN

(11) **EP 2 681 493 B1**
(45) Date de publication et mention de la délivrance du brevet: **14.10.2015**
(21) Numéro de dépôt: 12707874.9
(22) Date de dépôt: 07.02.2012
(51) Int. Cl.: E04F 13/08, F24D 3/16, F24D 3/14, F24D 19/06

(54) **STRUCTURE MODULAIRE CHAUFFANTE ADAPTABLE AUX MURS INTERIEURS DES BATIMENTS**
MODULARE HEIZSTRUKTUR FÜR INNERE GEBÄUDEWÄNDE
MODULAR HEATING STRUCTURE ADAPTABLE FOR BUILDING INSIDE WALLS

(30) Priorité: 04.03.2011 FR 1151752
(43) Date de publication de la demande: 08.01.2014
(73) Titulaire: GERFLOR, 69100 Villeurbanne (FR)
(72) Inventeur: FERLAY, Charles, F-69770 Montrottier (FR)
(74) Mandataire: Cabinet Laurent & Charras
(86) Numéro de dépôt international: PCT/FR2012/050258
(87) Numéro de publication internationale: WO 2012/120210

(56) Documents cités:
- DE-A1- 2 534 140
- DE-U1- 29 622 794
- FR-A1- 2 712 074

## Description

L'invention se rattache au secteur technique du chauffage de locaux d'habitation à usages multiples, privés et professionnels, de bureaux ou autres surfaces à chauffer.

De manière bien connue, le chauffage de bâtiments s'effectue par convection requérant des moyens en appareils d'installation souvent volumineux, apparents, qui nécessitent des applications au sol ou aux murs, pas toujours très esthétiques.

Dans le cadre de la rénovation de bâtiments et/ou locaux, l'alternative est de modifier la totalité de l'installation existante avec des coûts élevés ou de la conserver.

Il est connu aussi de réaliser des installations avec un chauffage au sol lequel est réputé pour présenter certains inconvénients pour les habitants. Il peut créer un certain inconfort pour des personnes habitant les lieux et qui peuvent avoir les jambes 'lourdes' pour des raisons circulatoires. C'est la propagation du chauffage par le sol qui entraîne cette gêne.

On connaît aussi le chauffage par rayonnement des différentes parois d'une pièce qui permet d'obtenir des conditions de confort et de température améliorées grâce à une surface d'échange plus importante. Les revêtements pariétaux existants font appel à une circulation d'eau chaude à l'intérieur du mur limitant fortement ses fonctionnalités.

Une solution technique a été décrite dans le brevet français 2 932 252 dont le Demandeur de la présente demande est co-déposant.

Dans ce document, il est aussi indiqué que l'installation qui met un revêtement de ce type pariétal est complétée avec l'utilisation d'une plinthe agencée au niveau de la jonction entre le sol de la pièce et le dit revêtement pariétal. La plinthe présente des perforations qui sont reliées à la seconde couche du dit revêtement pour permettre une convection naturelle en mode chauffage. Un ou des bandeaux perforés laissent s'échapper l'air chaud.

Cette solution décrite dans le brevet précité fait l'objet d'une expérimentation qui ouvre des perspectives très intéressantes.

Cependant, cette solution est susceptible de présenter certaines limites d'utilisations pour les raisons suivantes. Il est tout d'abord nécessaire d'avoir la possibilité d'un contrôle continu en maintenance de la partie chauffage par rayonnement mais la mise en oeuvre du revêtement pariétal sur toute la hauteur des parois de murs d'un local ne le permettrait pas. En outre, de manière connue, les conditions de chauffage entraînent souvent une détérioration, encrassement ou salissures des murs par la seule convection naturelle de l'air, sans compter l'aspect dégradation dû à l'environnement proprement dit. Le nettoyage des revêtements pariétaux reste délicat et il est difficile d'envisager un renouvellement de ces revêtements pariétaux à des cadences trop rapprochées car les coûts sont importants.

On connaît par ailleurs dans le document FR 2 712 074 une installation permettant l'obtention d'un mur chauffant par rayonnement tel que défini dans le préambule de la revendication 1.

On connaît aussi une installation définie dans le brevet DE 2 534 140.

Cependant les solutions décrites dans ces deux documents ne sont pas satisfaisantes.

La démarche du Demandeur a été donc de rechercher une solution tout en conservant le principe de chauffage par rayonnement par le mur qui reste le meilleur compromis pour le confort de l'occupant.

La démarche du Demandeur a aussi été de tenir compte des contraintes d'une capacité de contrôle constant des moyens de chauffage, de la maintenance et de leur emplacement.

La démarche a aussi été pour le Demandeur de limiter dans le cadre de la rénovation de bâtiments et de locaux les modifications des circuits de chauffage existants et les coûts engendrés.

La démarche du Demandeur a aussi été de tenir compte d'une capacité améliorée de pouvoir changer la face apparente de la paroi de mur en particulier dans la rénovation des bâtiments.

La solution apportée répond parfaitement à tous ces objectifs, tout en maîtrisant plusieurs contraintes, parfois antagonistes, afin d'obtenir un fonctionnement correct de la paroi de mur ou mur chauffant.

Selon une première caractéristique de l'invention, l'installation est une installation selon l'objet de la revendication 1.

Ces caractéristiques et d'autres encore ressortiront bien de la suite de la description.

Pour fixer l'objet de l'invention illustré d'une manière non limitative aux figures des dessins où :

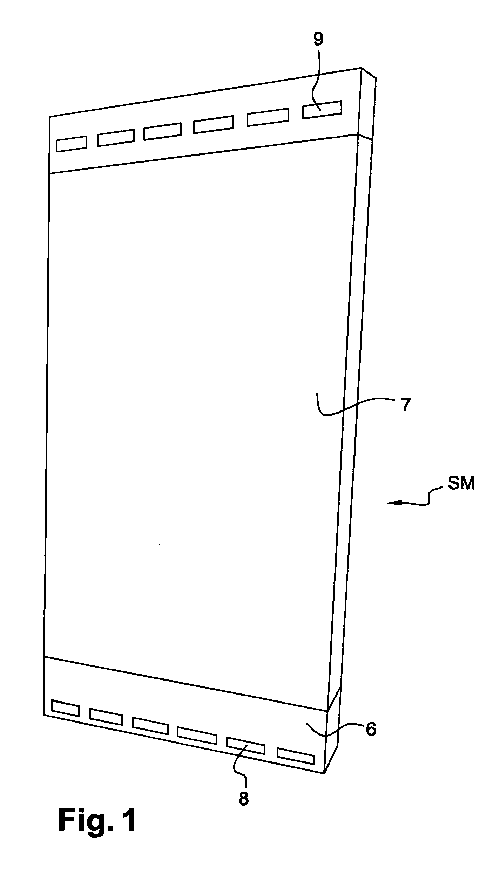

La figure 1 est une vue à caractère schématique d'une structure modulaire sous forme d'un panneau selon l'invention en vue extérieure,
La figure 2 est une vue de face de la structure modulaire sous forme d'un panneau selon l'invention après enlèvement des plaques de protection et de décoration,
La figure 3 est une vue de côté de la structure modulaire sous forme d'un panneau selon la figure 2,
La figure 4 est une vue à caractère schématique de l'échangeur thermique installé dans la structure modulaire,
La figure 5 est une vue partielle de côté illustrant le profil de l'échangeur thermique,
La figure 6 est une vue à caractère schématique illustrant les rendements d'échanges thermiques selon les zones de la structure modulaire.

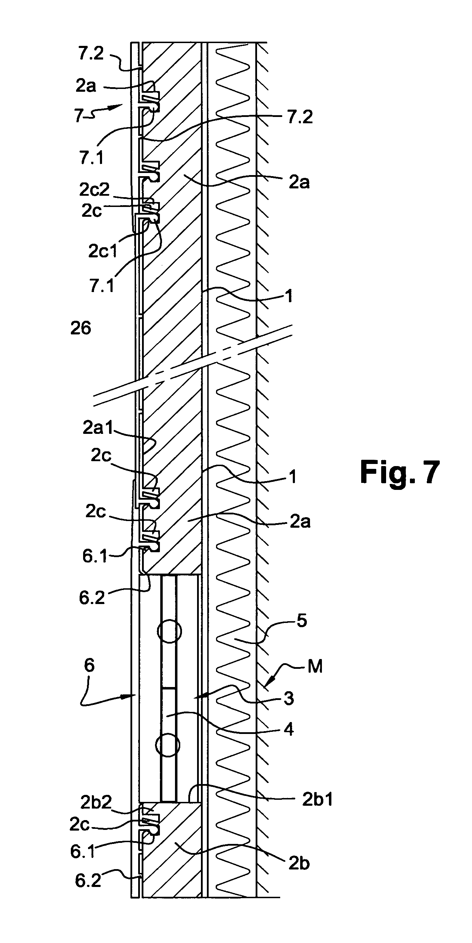

La figure 7 est une vue en coupe montrant l'ajustement des plaques de protection et de décoration sur les montants verticaux de la structure modulaire.

Afin de rendre plus concret l'objet de l'invention, on le décrit maintenant d'une manière non limitative illustrée aux figures des dessins.

L'invention vise une structure modulaire référencée dans son ensemble par (SM) en forme de panneau susceptible de venir en appui et fixation contre des murs d'un local à chauffer. On utilisera pour la suite de la description le terme 'local' pour identifier toute construction de tous usages destinés à inclure la ou les structure(s) modulaire(s) permettant de créer un mur chauffant par rayonnement. Ainsi, la structure modulaire constitue en elle-même un module et le nombre de modules assemblés côte à côte est donc variable en fonction des caractéristiques dimensionnelles des murs à recouvrir et aussi des effets thermiques recherchés, et aussi des effets esthétiques dans l'aménagement du local considéré. On décrira par la suite une structure modulaire étant considéré que plusieurs structures modulaires peuvent être disposées en alignement jointif avec tous moyens de liaison entre elles appropriés.

La structure modulaire (SM) est destinée à venir en appui directement contre un mur (M) ou contre une épaisseur d'isolant intérieur intermédiaire (5) connu en soi, laine de verre, laine de bois, polystyrène ou autres. Cette structure modulaire est ancrée au mur en traversant la couche d'isolation, s'il y en a une, par tous moyens appropriés. Dans une mise en oeuvre particulière, la structure modulaire (SM) peut directement intégrer l'isolant intérieur (5) de manière que ce soit l'ensemble directement qui soit ancré au mur. Dans ce cas, le matériau isolant est disposé entre la paroi de fond (1) de la structure modulaire et une autre paroi intermédiaire contre laquelle sont fixés les montants verticaux (2).

La structure modulaire (SM) est établie de préférence sur la hauteur du mur (M) à recouvrir ou sensiblement, c'est-à-dire sur une hauteur entre le sol et le plafond ou sensiblement. Cette structure modulaire (SM) disposée verticalement comprend une paroi de fond (1) contre laquelle est disposée verticalement une pluralité de montants verticaux (2) régulièrement espacés et parallèles en définissant entre eux et en intervalle un espace (e1) dont la fonction sera précisée par la suite. Chaque montant (2) comprend en alignement un montant supérieur (2a) de grande hauteur et un montant inférieur (2b) de faible hauteur définissant entre eux, par la pluralité de montants, un bandeau horizontal (3) continu servant au logement de l'échangeur thermique (4). Plus spécifiquement, les montants inférieurs (2b) sont établis sur une faible hauteur et viennent en appui au sol. Ils sont fixés par collage, vissage à la paroi de fond (1) ou par tous autres moyens. Leur largeur est de quelques centimètres. Le montant supérieur (2a) est donc établi sur une grande hauteur à partir sensiblement de la partie supérieure de l'échangeur jusqu'au plafond du local ou sensiblement. Les montants supérieurs (2a) sont aussi fixés par collage, vissage ou autrement sur la plaque de fond (1). Entre les montants (2a) (2b), on définit entre eux un espace volumétrique (e2) sur toute la largeur horizontale de la structure modulaire en définissant le bandeau (3) autorisant le positionnement de l'échangeur thermique propre à chaque structure modulaire. L'échangeur (4) est posé en appui sur la face supérieure horizontale (2b1) des montants verticaux inférieurs et est établi sur toute la largeur du module correspondant. Des moyens de fixation non représentés sont utilisés pour fixer l'échangeur par rapport à la plaque de fond (1) et en assurer le maintien.

Selon une disposition importante, la hauteur des montants inférieurs (2b) et celle de l'échangeur (4) correspond sensiblement à une hauteur de plinthe classique dans un local d'habitation.

Par ailleurs, les dits montants verticaux (2a) (2b) sont agencés sur leur face apparente extérieure (2a1) (2b2) avec des moyens (2c) de configuration femelle pour autoriser l'emboîtement et la fixation rapide et démontable de plaques de protection et de décoration (6) et (7), elles-mêmes agencées avec des moyens d'ancrage complémentaires mâles (6.1) (7.1). Plus spécifiquement, comme illustré aux figures des dessins, les montants verticaux (2a)(2b) sont agencés de manière identique, avec des moyens (2c) constituant des logements en forme de rainures profilées agencés avec une partie en forme de crochet et une partie en forme de languette respectivement (2c1)(2c2) pour recevoir les moyens de fixation mâles complémentaires (6.1)(7.1) formés sur les plaques de protection et de décoration. Ces moyens d'ancrage sont décrits et illustrés de manière non limitative. Les languettes (2c2) qui ont une certaine flexibilité ont pour fonction d'absorber les déformations matière des éléments d'ancrage (6.1) (7.1). Ainsi, le montant inférieur (2b) est aménagé avec un logement (2c) du type décrit pour la fixation inférieure de la plaque de protection inférieure (6). Le montant supérieur (2a) est aménagé dans sa partie basse avec deux logements (2c) successifs, l'un pour la fixation de la plaque de protection (6) dans sa partie supérieure, et le second pour la fixation de la plaque de protection (7) dans sa partie inférieure. Le montant supérieur (2a) présente dans sa partie supérieure un logement (2c) du type précité pour la fixation de la plaque de protection supérieure (7). Le cas échéant, les montants verticaux supérieurs (2a) et la plaque de protection supérieure (7) peuvent être agencés à mi hauteur, par exemple, avec des moyens d'ancrage complémentaires (2c) (7.1) pour compléter la fixation et la tenue. On peut concevoir sans sortir de la portée de l'invention que la plaque de protection (7) supérieure puisse être réalisée en une ou plusieurs parties en prévoyant alors d'agencer les montants verticaux (2a) avec un nombre de logements (2c) susceptibles de les recevoir. Les plaques de protection (6) et (7) sont réalisées en tous matériaux conducteurs ayant une conductivité thermique déterminée et sont clipsables sur les montants (2a) (2b) récepteurs. Ces plaques doivent néanmoins assurer la fonction de rayonnement thermique recherché et les matériaux sont adaptés pour répondre à cette fonctionnalité. Les plaques sont facilement démontables et on peut modifier à volonté l'aspect apparent des parois de murs ainsi constituées.

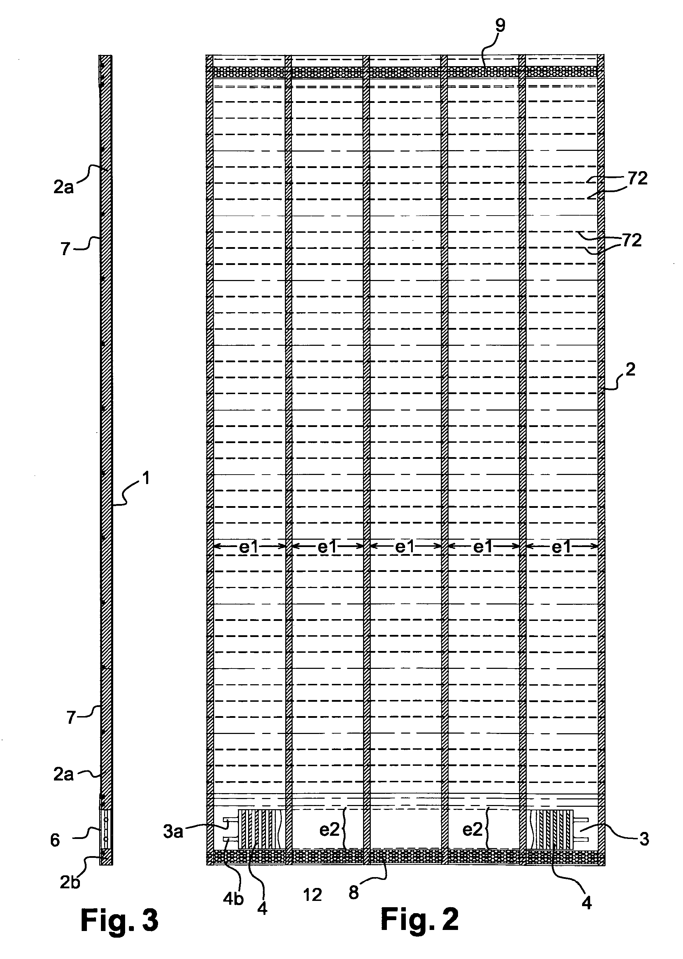

Selon une autre disposition de l'invention, l'échangeur thermique (4) traverse la quasi-totalité de la largeur de chaque module de la structure modulaire. L'échangeur (4) comprend de manière classique des arrivées et sorties (4a) (4b) de conduits de circulation de fluide qui sont agencées pour recevoir des organes de raccordement, de type plomberie, à démontage rapide. Ainsi, comme illustré figure 2, l'échangeur ne débouche pas hors de la structure modulaire. Les conduits d'arrivées et de sorties de fluide (4a) (4b) sont en léger retrait intérieur dans le bandeau 3 en permettant l'introduction et la fixation des organes de raccordement et de branchement permettant ainsi leur protection. En fin de circuit, l'échangeur comprend un raccordement en boucle de type connu. L'échangeur thermique étant disposé dans la quasi-intégralité de la largeur de la structure modulaire, le chauffage qu'il procure va permettre un écoulement d'air par élévation dans les conduits ou lames d'air formées entre les montants verticaux (2a), la plaque de fond (1) et les plaques (6) et (7) de protection et de décoration, selon les espaces (e1) ainsi définis. En bas de la structure modulaire est prévue une ou des grille(s) inférieures (8) de ventilation et d'entrée d'air ambiant, et en partie haute de la structure modulaire, une ou des grilles (9) de ventilation et de sortie d'air chaud. Par ailleurs, les plaques de protection (6) et (7) sont chauffées, elles-mêmes, et transmettent par rayonnement la chaleur dans le local récepteur.

Ainsi, selon l'invention, on améliore considérablement la quantité de chaleur transmise dans le local à la fois par la bouche de sortie d'air chaud, mais surtout par la qualité de rayonnement thermique donnée par les plaques (6) et (7). Ces dernières sont évidemment réalisées dans des matériaux qui sont aptes à faciliter et à transférer la conductivité thermique tout en étant d'une grande solidité et pouvant offrir des aspects décoratifs spécifiques.

La tenue des plaques (6) et (7) par rapport aux montants est également améliorée et assurée par la réalisation sur leur face interne d'une pluralité de raidisseurs horizontaux (6.2) (7.2) qui viennent prendre appui contre les faces (2a1) (2b2) en regard des dits montants. Cela évite tout effet de voilage inapproprié des plaques.

Dans le cadre de l'optimisation du rendement thermique de l'échangeur, celui-ci est conçu dans une configuration en cannelures (4c) sur chacune de ses faces afin d'augmenter les surfaces de chauffe. La constitution de l'échangeur relève des connaissances de l'Homme de Métier.

On a ainsi procédé à partir de prototype à un certain nombre de mesures du transfert de l'énergie thermique.

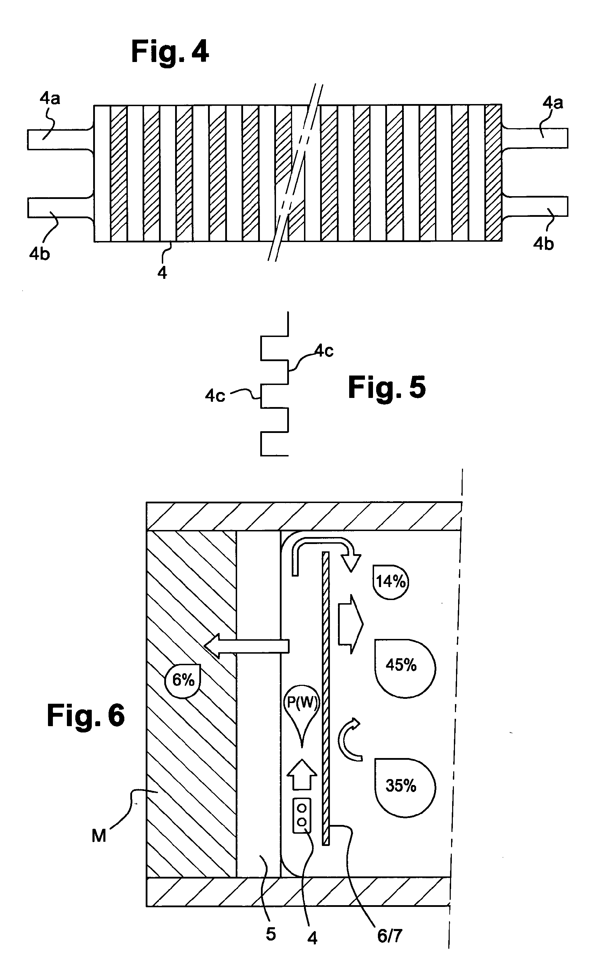

Comme représenté au schéma de la figure 6, l'énergie thermique est transférée par rayonnement à environ 35% dans la partie basse de la structure modulaire à l'endroit et proche de la zone de positionnement de l'échangeur, à 45% dans la partie supérieure, au-dessus de la précédente, et en deçà des bouches (9) de ventilation, qui, elles, provoquent une sortie de 15 % de l'énergie thermique émise. Le mur d'appui, à travers l'isolant (5), récupère environ 6 % de la chaleur émise.

Les côtés des chants latéraux de chaque structure modulaire sont évidemment fermés de manière appropriée pour assurer la fonction de conductivité thermique recherchée et une optimisation de la surface rayonnante.

Les avantages ressortent bien de l'invention. On souligne le nouveau concept de la structure modulaire rayonnante qui offre une surface de chauffe et de rayonnement très importante.

L'enlèvement des plaques de protection (6) et (7) permet aussi d'assurer un entretien, un nettoyage et une maintenance.

La multiplication des lames d'air entre deux montants verticaux consécutifs offre une homogénéité de transfert de la chaleur.

La fabrication est simple et peu coûteuse et l'installation de plusieurs structures modulaires selon l'invention trouve des applications avantageuses dans le domaine de la rénovation de bâtiments.

La structure modulaire chauffante selon l'invention permet une adaptabilité rapide à la géométrie locale du bâtiment ou des pièces en utilisant la possibilité de clipsage des plaques extérieures (7) et en adaptant leurs formes et dimensions. La multiplicité des points de fixation en hauteur permet une adaptation de la hauteur des panneaux et des plaques selon les besoins.

Un autre avantage réside notamment dans la rénovation de bâtiments qui ont été préalablement agencés avec des radiateurs ou convecteurs de remplacer ceux-ci sans modification des circuits de chauffage et d'adapter la structure modulaire chauffante en la connectant directement aux circuits existants.

Les structures modulaires chauffantes peuvent être disposées sur un, plusieurs murs ou l'ensemble des murs d'un local en fonction des besoins.

La chaleur obtenue par le rayonnement s'effectue sur toute la hauteur des structures modulaires chauffantes, c'est-à-dire sur la quasi totalité de la hauteur de la pièce, du sol au plafond, contribuant ainsi à donner aux occupants la totalité de leur corps étant ainsi chauffé par ce rayonnement homogène.

Les structures modulaires et le branchement des échangeurs avec des raccordements de plomberie - type PER - à branchement rapide, permettent une adaptation à tous les murs avec des fonctions faciles à mettre en oeuvre. La configuration des plaques de protection (6) et (7) et de leur rayonnement avec leurs parties raidisseurs et clips mâles permet d'avoir la résistance de la surface à la flexion, tout en conservant une épaisseur de surface très fine offrant le minimum de résistance thermique et nécessaire au fonctionnement du mur et à son rayonnement. Les raidisseurs et les clips ont une dimension appropriés, permettant de limiter les pertes de charge dans les lames d'air et de ne pas perturber ou bloquer les vitesses d'air dans la structure modulaire constituée faisant office de mur intérieur.

## Revendications

1. Installation permettant l'obtention d'un mur chauffant par rayonnement, ladite installation comprenant au moins une structure modulaire (SM) chauffante en forme de panneau, dont la hauteur correspond à la hauteur du mur chauffant à obtenir, la structure modulaire en forme de panneau pouvant être disposée verticalement avec la face arrière en appui contre un mur, chaque structure modulaire (SM) en forme de panneau étant constituée d'une pluralité de montants verticaux (2) espacés et parallèles disposés à une paroi de fond, où chaque montant vertical (2) comprend un montant supérieur (2a) sous lequel est disposé horizontalement un échangeur thermique (4) avec des conduits de circulation de fluide, et où les montants verticaux sont agencés avec des moyens autorisant la fixation par montage rapide d'une plaque de protection et de décoration, **caractérisé en ce que** les montants verticaux sont fixés à la paroi de fond, et **en ce que** chaque montant vertical comprend ledit montant supérieur (2a) et un montant inférieur (2b) en alignement et l'échangeur thermique (4) est disposé horizontalement entre eux, et **en ce qu'**elle comprend plusieurs plaques (6-7) de protection et de décoration, et **en ce que** les moyens de fixation des montants supérieurs et inférieurs permettent également le démontage rapide, et **en ce que** chaque structure modulaire comprend dans sa partie basse et dans sa partie haute des grilles de ventilation (8-9), et **en ce que** les conduits d'acheminement d'air sont définis par les lames situées entre chaque couple de montants verticaux (2a) consécutifs, les plaques de protection et de décoration et la paroi de fond.

2. Installation selon la revendication 1, **caractérisée en ce que** les montants verticaux (2a) (2b) en alignement définissent entre eux un espace volumétrique (e2) sur toute la largeur horizontale de chaque structure modulaire (SM) en définissant un bandeau (3) autorisant le positionnement de l'échangeur thermique (4).

3. Installation selon la revendication 2, **caractérisée en ce que** chaque échangeur (4) est posé en appui sur la face supérieure horizontale (2b1) des montants verticaux inférieurs et en étant fixé à la plaque de fond, chaque échangeur comprenant des arrivées et sorties (4a) (4b) de conduits de circulation de fluide disposés en retrait des parties d'extrémité de chaque structure modulaire, et **en ce que** le dit échangeur reçoit des raccordements de branchement à montage rapide sur les arrivées et sorties de conduits de fluide.

4. Installation selon la revendication 1, **caractérisée en ce que** les montants verticaux (2a) (2b) sont agencés sur leur face apparente extérieure avec des moyens (2c) de configuration femelle pour autoriser l'emboîtement et la fixation rapide et démontable de plaques de protection et de décoration (6) et (7) incluant des moyens d'ancrage complémentaires mâles (6.1) (7.1).

5. Installation selon la revendication 2, **caractérisée en ce que** la plaque de protection (6) recouvre sensiblement les montants inférieurs verticaux (2b), le bandeau (3) de réception de l'échangeur (4), la dite plaque venant se fixer dans sa partie basse sur chaque montant inférieur (2b) et en partie basse de chaque montant supérieur (2a).

6. Installation selon la revendication 1, **caractérisée en ce que** la plaque de protection (7) est fixée dans la partie inférieure du montant supérieur (2a) et dans la partie supérieure du montant supérieur (2a).

7. Installation selon la revendication 1, **caractérisée en ce que** les plaques (6) et (7) présentent une pluralité de raidisseurs horizontaux (6.2) (7.2) prenant appui contre les faces en regard des montants (2a) (2b).

8. Installation selon la revendication 1, **caractérisée en ce que** les plaques (6) et (7) sont réalisées en un matériau conducteur thermiquement.

9. Installation selon la revendication 1, **caractérisée en ce que** les structures modulaires chauffantes intègrent directement un matériau d'isolation (5) disposé entre la paroi de fond (1) de chaque structure et une paroi intermédiaire contre laquelle sont fixées les montants verticaux (2).

10. Installation selon la revendication 9, **caractérisée en ce que** le matériau isolant (5) est disposé entre la paroi de fond (1) et la paroi de mur en regard.

## Patentansprüche

1. Anlage, die den Erhalt einer Strahlungswandheizung ermöglicht, wobei die genannte Anlage wenigstens eine modulare Heizstruktur (SM) in Form eines Paneels umfasst, dessen Höhe der Höhe der zu erhaltenden Wandheizung entspricht, wobei die modulare Struktur in Form eines Paneels vertikal mit der hinteren Seite aufstützend gegen eine Wand angeordnet sein kann, wobei jede modulare Struktur (SM) in Form eines Paneels aus einer Vielzahl von vertikalen Pfosten (2) gebildet ist, die voneinander beabstandet und parallel zu einer Bodenwand angeordnet sind, wo jeder vertikale Pfosten (2) einen oberen Pfosten (2a) umfasst, unter dem horizontal ein Wärmetauscher (4) mit Umlaufleitungen des Mediums angeordnet ist und wo vertikale Pfosten mit Mitteln angeordnet sind, die die Befestigung einer Schutz- und Dekorationsplatte per Schnellmontage zulassen, **dadurch gekennzeichnet, dass** die vertikalen Pfosten an der Bodenwand befestigt sind, und dass jeder vertikale Pfosten den genannten oberen Pfosten (2a) und einen unteren Pfosten (2b) in Fluchtung umfasst und der Wärmetauscher (4) horizontal zwischen ihnen angeordnet ist und dass sie mehrere Schutz- und Dekorationsplatten (6-7) umfasst und dass die Befestigungsmittel der oberen und unteren Pfosten ebenfalls die rasche Demontage zulassen und dass jede modulare Struktur in ihrem unteren Teil und in ihrem oberen Teil Belüftungsgitter (8-9) umfasst und dass die Luftzufuhrleitungen durch Lamellen, die sich zwischen jedem Paar vertikaler Pfosten (2a) befinden, die Schutz- und Dekorationsplatten und die Bodenwand definiert sind.

2. Anlage gemäß Anspruch 1, **dadurch gekennzeichnet, dass** die vertikalen Pfosten (2a) (2b) in der Fluchtung untereinander einen Volumenraum (e2) über die gesamte horizontale Breite jeder modularen Struktur (SM) definieren und dabei eine Blende (3) definieren, die die Positionierung des Wärmetauschers (4) zulässt.

3. Anlage gemäß Anspruch 2, **dadurch gekennzeichnet, dass** jeder Tauscher (4) aufstützend auf der oberen horizontalen Seite (2b1) der unteren vertikalen Pfosten angebracht ist und dass er an der Bodenplatte befestigt ist, wobei jeder Tauscher Zu- und Abläufe (4a) (4b) der Umlaufleitungen des Mediums umfasst, die von den Endteilen jeder modularen Struktur zurückgezogen angeordnet sind, und dass der genannte Tauscher Abzweigstutzen für die Schnellmontage an den Zu- und Abläufen der Leitungen des Mediums aufnimmt.

4. Anlage gemäß Anspruch 1, **dadurch gekennzeichnet, dass** die vertikalen Pfosten (2a) (2b) auf jeder sichtbaren äußeren Seite mit weiblichen Konfigurationsmitteln (2c) angeordnet sind, um das Eingreifen und die abnehmbare Schnellbefestigung von Schutz- und Dekorationsplatten (6) und (7) zuzulassen, die männliche komplementäre Verankerungsmittel (6.1) (7.1) einschließen.

5. Anlage gemäß Anspruch 2, **dadurch gekennzeichnet, dass** die Schutzplatte (6) deutlich die unteren vertikalen Pfosten (2b), die Aufnahmeblende (3) des Tauschers (4) abdeckt, wobei sich die genannte Platte in ihrem unteren Teil auf jedem unteren Pfosten (2b) und in ihrem unteren Teil jedes oberen Pfostens (2a) befestigt wird.

6. Anlage gemäß Anspruch 1, **dadurch gekennzeichnet, dass** die Schutzplatte (7) im unteren Teil des oberen Pfostens (2a) und im oberen Teil des oberen Pfostens (2a) befestigt ist.

7. Anlage gemäß Anspruch 1, **dadurch gekennzeichnet, dass** die Platten (6) und (7) eine Vielzahl von horizontalen Versteifungen (6.2) (7.2) aufweist, die gegen die Seiten gegenüber von den Pfosten (2a) (2b) zum Aufstützen kommen.

8. Anlage gemäß Anspruch 1, **dadurch gekennzeichnet, dass** die Platten (6) und (7) aus einem thermisch leitfähigen Material realisiert sind.

9. Anlage gemäß Anspruch 1, **dadurch gekennzeichnet, dass** die modularen Heizstrukturen direkt ein Dämmmaterial (5) beinhalten, das zwischen der Bodenwand (1) jeder Struktur und einer Zwischenwand angeordnet ist, gegen die die vertikalen Pfosten (2) befestigt sind.

10. Anlage gemäß Anspruch 9, **dadurch gekennzeichnet, dass** das Dämmmaterial (5) zwischen der Bodenwand (1) und der gegenüberliegenden Mauerwand angeordnet ist.

## Claims

1. Installation enabling to obtain a radiative heating wall which comprises at least one panel-shaped modular heating structure (SM) having its height corresponding to the height of the premises to be heated from the floor to the ceiling, the panel-shaped modular structure being likely to be arranged vertically with its rear surface resting against a wall, each panel-shaped modular structure (SM) being formed of a plurality of spaced-apart parallel vertical posts (2) arranged on a back wall, where each vertical post (2) comprises an upper post (2a) under which is horizontally arranged a heat exchanger (4) with fluid circulation ducts, and where the vertical posts are fitted with means allowing a protective and decorative panel to be quickly fitted thereto, **characterized in that** the vertical posts are fixed to the back wall and **in that** each vertical post comprises said upper post (2a) and a lower post (2b) aligned with each other and the heat exchanger (4) is horizontally arranged between them, and **in that** it comprises several protective and decorative panels (6-7), and **in that** the means for fitting the upper and lower posts also allow a fast disassembly, and **in that** each modular structure comprises in its lower portion and in its upper portion ventilation gratings (8-9), and **in that** the air conducting passages are defined by the strips located between each pair of consecutive vertical posts (2a), the protective and decorative panels, and the back wall.

2. Installation according to claim 1, **characterized in that** the aligned vertical posts (2a) (2b) define between them a volume space (e2) across the entire horizontal width of each modular structure (SM) by defining a band (3) authorizing the positioning of the heat exchanger (4).

3. Installation according to claim 2, **characterized in that** each exchanger (4) rests on the upper horizontal surface (2b 1) of the lower vertical posts while being fixed to the back plate, each exchanger comprising inlets and outlets (4a) (4b) of fluid circulation ducts arranged backwards of the end portions of each modular structure, and **in that** said exchanger receives quick-assembly branching connections on the inlets and outlets of fluid ducts.

4. Installation according to claim 1, **characterized in that** the vertical posts (2a) (2b) are fitted on their external apparent surface with means (2c) of female configuration to allow the nesting and the fast removable fixing of protective and decorative panels (6) and (7), including complementary male anchoring means (6.1) (7.1).

5. Installation according to claim 2, **characterized in that** the protective panel (6) substantially covers the lower vertical posts (2b), the band (3) for receiving the exchanger (4), said panel being fixed in its lower portion on the lower post (2b) and on the lower portion of the upper post (2a).

6. Installation according to claim 1, **characterized in that** the protective panel (7) is fixed to the lower portion of the upper post (2a) and to the upper portion of the upper post (2a).

7. Installation according to claim 1, **characterized in that** the panels, (6) and (7), have a plurality of horizontal stiffeners (6.2) (7.2) bearing against the opposite surfaces of the posts (2a) (2b).

8. Installation according to claim 1, **characterized in that** the panels (6) and (7) are made of a thermally-conductive material.

9. Installation according to claim 1, **characterized in that** the modular heating structures directly integrate an insulating material (5) arranged between the back wall (1) of each structure and an intermediate wall having the vertical posts (2) fixed against it.

10. Installation according to claim 9, **characterized in that** the insulating material (5) is arranged between the back wall (1) and the opposite wall lining.
